# EUROPEAN PATENT SPECIFICATION

(11) **EP 1 916 280 B1**
(45) Date of publication and mention of the grant of the patent: **28.11.2012**
(21) Application number: 07115536.0
(22) Date of filing: 03.09.2007
(51) Int. Cl.: C09D 11/00

(54) **Pigmented phase change inks**
Pigmentierte Phasenwechseltinten
Encres pigmentées à changement de phase

(30) Priority: 26.10.2006 US 553294
(43) Date of publication of application: 30.04.2008
(73) Proprietor: Xerox Corporation, Rochester, New York 14644 (US)
(72) Inventor: Allen, Geoffrey C., Waterdown Ontario L0R 2H5 (CA); Goredema, Adela, Mississauga Ontario L5H 3V1 (CA); Drappel, Stephan V., Mississauga Ontario L5H 3R2 (CA); Kharbanda, Neha, Markham Ontario L3S 3W5 (CA); Turek, Caroline M., Hamilton Prince Edward Island L8P 4R6 (CA); Toma, Eniko, Mississauga Ontario L5M 6S9 (CA); Wagner, Christopher A., Etobicoke Ontario M9A 1L3 (CA)
(74) Representative: Grünecker, Kinkeldey, Stockmair & Schwanhäusser

(56) References cited:
- WO-A-01/23481
- US-A- 3 996 059
- US-A1- 2004 132 862

## Description

Described herein are inks such as solid phase change or hot melt inks that may be used in a number of copying and printing devices.

In embodiments, an advantage associated with the pigmented phase change inks disclosed herein is that the ink may be used in place of a conventional dye-based ink of the same color, thereby giving inks with improved image permanence. Improved image permanence is provided based on the improved colorfastness, lightfastness, and durability typically provided by pigments.

The phase change ink compositions illustrated herein in embodiments are solid at room temperature, for example from about 23°C to about 27°C and are suitable for ink jet printing processes, particularly thermal ink jet printing processes.

### REFERENCES

Ink jetting devices are well known in the art. As described in U.S. Patent No. 6,547,380, ink jet printing systems are generally of two types: continuous stream and drop-on-demand. In continuous stream ink jet systems, ink is emitted in a continuous stream under pressure through at least one orifice or nozzle. The stream is perturbed, causing it to break up into droplets at a fixed distance from the orifice. At the break-up point, the droplets are charged in accordance with digital data signals and passed through an electrostatic field that adjusts the trajectory of each droplet in order to direct it to a gutter for recirculation or a specific location on a recording medium. In drop-on-demand systems, a droplet is expelled from an orifice directly to a position on a recording medium in accordance with digital data signals. A droplet is not formed or expelled unless it is to be placed on the recording medium. There are generally three types of drop-on-demand ink jet systems. One type of drop-on-demand system is a piezoelectric device that has as its major components an ink filled channel or passageway having a nozzle on one end and a piezoelectric transducer near the other end to produce pressure pulses. Another type of drop-on-demand system is known as acoustic ink printing. As is known, an acoustic beam exerts a radiation pressure against objects upon which it impinges. Thus, when an acoustic beam impinges on a free surface (i.e., liquid/air interface) of a pool of liquid from beneath, the radiation pressure which it exerts against the surface of the pool may reach a sufficiently high level to release individual droplets of liquid from the pool, despite the restraining force of surface tension. Focusing the beam on or near the surface of the pool intensifies the radiation pressure it exerts for a given amount of input power. Still another type of drop-on-demand system is known as thermal ink jet, or bubble jet, and produces high velocity droplets. The major components of this type of drop-on-demand system are an ink filled channel having a nozzle on one end and a heat generating resistor near the nozzle. Printing signals representing digital information originate an electric current pulse in a resistive layer within each ink passageway near the orifice or nozzle, causing the ink vehicle (usually water) in the immediate vicinity to vaporize almost instantaneously and create a bubble. The ink at the orifice is forced out as a propelled droplet as the bubble expands.

In a typical design of a piezoelectric ink jet device, the image is applied by jetting appropriately colored inks during four to eighteen rotations (incremental movements) of a substrate such as an image receiving member or intermediate transfer member with respect to the ink jetting head, i.e., there is a small translation of the printhead with respect to the substrate in between each rotation. This approach simplifies the printhead design, and the small movements ensure good droplet registration. At the jet operating temperature, droplets of liquid ink are ejected from the printing device and, when the ink droplets contact the surface of the recording substrate, either directly or via an intermediate heated transfer belt or drum, they quickly solidify to form a predetermined pattern of solidified ink drops.

Thermal ink jet processes are well known and are described, for example, in U.S. Patents Nos. 4,601,777, 4,251,824, 4,410,899, 4,412,224 and 4,532,530.

Ink jet printing processes may employ inks that are solid at room temperature and liquid at elevated temperatures. Such inks may be referred to as hot melt inks or phase change inks. For example, U.S. Patent No. 4,490,731 discloses an apparatus for dispensing solid ink for printing on a substrate such as paper. In thermal ink jet printing processes employing hot melt inks, the solid ink is melted by the heater in the printing apparatus and utilized (i.e., jetted) as a liquid in a manner similar to that of conventional thermal ink jet printing. Upon contact with the printing substrate, the molten ink solidifies rapidly, enabling the colorant to substantially remain on the surface of the substrate instead of being carried into the substrate (for example, paper) by capillary action, thereby enabling higher print density than is generally obtained with liquid inks. Advantages of a phase change ink in ink jet printing are thus elimination of potential spillage of the ink during handling, a wide range of print density and quality, minimal paper cockle or distortion, and enablement of indefinite periods of nonprinting without the danger of nozzle clogging, even without capping the nozzles.

U.S. Patents Nos. 5,006,170 and 5,122,187 disclose hot melt ink compositions suitable for ink jet printing which comprise a colorant, a binder, and a propellant.

U.S. Patent No. 5,593,486 describes a hot melt ink composition comprising (a) an ink vehicle that is solid at about 25°C and having a viscosity of from about 1 to about 20 centipoise at a temperature suitable for hot melt ink jet printing, the temperature being greater than about 45°C, (b) a photochromic material, (c) an optional colorant, and (d) an optional propellant

Pigmented hot melt ink compositions that include various dispersants are also known. For example, pigmented hot melt ink compositions that include SOLSPERSE™ dispersants are described in WO 99/42523 and U.S. Patent Publication No. 2003/0127021. Exemplary patents that disclose pigmented hot melt ink compositions using other dispersants include U.S. Patents Nos. 5,053,079, 5,221,335, and 6,001,901 and European Patent publications 535973 and 535974.

US-A-2004/132862 discloses a radiation curable hotmelt ink composition comprising:
- a colorant;
- a polymerizable monomer; and
- a photoinitiating system comprising 0.5 to 1.5% by weight of an aromatic ketene photoinitiator, 2 to 10% by weight of an amine synergist, 3 to 8% by weight of an α-cleavage type photoinitiator, and 0.5 to 1.5% by weight of a photosensitizer.

WO-A-01/23481 relates to an ink composition comprising a pigment, a mineral oil, a fatty acid, a low melting point wax and a resin, wherein the ink composition is a semi-solid at room temperature.

US Patent 3,996,059 relates to specific dispersing agents valuable for the preparation of dispersions of solids, particularly pigments in organic liquids.

While known compositions and processes are suitable for their intended purposes, a need remains for an improved colored phase change ink composition. For example, there remains a need for phase change inks with pigment colorants where the pigment particles are stable and well dispersed in the ink. There remains a need for pigmented phase change inks with improved image quality, improved light fastness, and reduced show through. A need also remains for pigmented phase change inks where the colorants have reduced agglomeration and settling in the ink when the ink is exposed to high temperatures for prolonged periods. A need also remains for pigmented inks with reduced clogging of the jets in the printhead.

There are a few challenges in incorporating an organic pigment into current solid ink formulation. Typical current ink formulations have many non-polar components that hinder pigment stabilization. On the other hand, organic pigments are anisotropic and have lower polarity that makes it difficult for long-term adsorption and stabilization by a dispersant. The low viscosity and high ink temperature requires a pigment dispersant that is anchored (such as adsorbed, attached or grafted) to the pigment particle and having a tail that is compatible with the low polarity vehicle. Thus, to successfully disperse the pigments in typical current low energy ink vehicles, a dispersant is needed such that it strongly anchors (such as adsorbs) to the pigment particle to withstand high ink temperatures and have a tail that is compatible with the low polarity vehicle.

Described herein are inks, particularly solid inks, that include an ink vehicle, pigment particles, and a dispersant that stabilizes the pigment particles, for example, that comprises first functional groups that anchor the dispersant to the pigment particles and second functional groups that are compatible with the ink vehicle. In embodiments, the ink compositions pass 1 µm filtration through glass fiber filters, show Newtonian behavior, pass at least 3 freeze-thaw cycles and are stable for at least 10-14 days at 120°C, and/or without showing any significant settling after 7 days at 120°C. The ink compositions can be successfully printed in a solid ink printing apparatus.

The present invention provides
a phase change ink composition comprising:
an ink carrier,
a dispersing agent, and
pigment particles,
wherein the dispersing agent is of the formula: 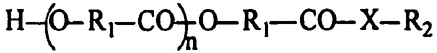
wherein each R₁ is an alkylene group containing from 8 to 40 carbon atoms; X is (i) an oxygen atom, (ii) an alkylene group which is attached to the carbonyl group through an oxygen or nitrogen atom with at least 2 carbon atoms; R₂ is (i) a hydrogen atom, (ii) a primary, secondary or tertiary amine group or a salt thereof with an acid, or a quaternary ammonium salt group; and n is an integer between 2 and 20, and
wherein the ink carrier comprises a urethane derivative of the following formula 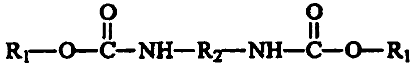
wherein R₁ is an alkyl group of the formula CH₃(CH₂)ₙ, n is an integer of from 5 to 200, and R₂ is an arylene group.

The present invention further provides a method for making an ink jet ink composition, comprising:
mixing an ink carrier, a dispersing agent, and pigment particles to form a homogeneous composition, wherein the dispersing agent is of the formula: 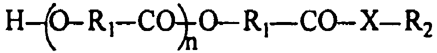
wherein each R₁ is an alkylene group containing from 8 to 40 carbon atoms; X is (i) an oxygen atom, (ii) an alkylene group which is attached to the carbonyl group through an oxygen or nitrogen atom with at least 2 carbon atoms; R₂ is (i) a hydrogen atom, (ii) a primary, secondary or tertiary amine group or a salt thereof with an acid, or a quaternary ammonium salt group; and n is an integer between 2 and 20, and
wherein the ink carrier comprises a urethane derivative of the following formula 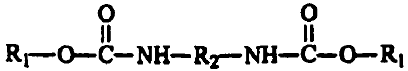
wherein R₁ is an alkyl group of the formula CH₃(CH₂)ₙ, n is an integer of from 5 to 200, and R₂ is an arylene group.

The present invention also provides a method of forming an image, comprising:
providing an ink composition comprising an ink carrier, a dispersing agent,
and pigment particles, wherein the ink composition is the above phase change ink composition, and
applying the ink composition to a substrate to form an image.

The present invention moreover provides a printer cartridge comprising the above ink jet ink composition.

The present invention also provides a printer comprising the above printer cartridge.

Preferred embodiments are set forth in the subclaims.

Examples of the phase change inks herein are inks that include an ink vehicle that is solid at temperatures of 23°C to 27°C, for example room temperature, and specifically are solid at temperatures below 60°C. However, the inks change phase upon heating, and are in a molten state at jetting temperatures. Thus, the inks have a viscosity of from 1 to 20 centipoise (cp), for example from 5 to 15 cp or from 8 to 12 cp, at an elevated temperature suitable for ink jet printing, for example temperatures of from 60°C to 150°C.

In this regard, the inks herein may be either low energy inks or high energy inks. Low energy inks are solid at a temperature below 40°C and have a viscosity of from 1 to 20 centipoise such as from 5 to 15 centipoise, for example from 8 to 12 cp, at a jetting temperature of from 60°C to 100°C such as 80°C to 100°C, for example from 90°C to 100°C. High energy inks are solid at a temperature below 40°C and have a viscosity of from 5 to 15 centipoise at a jetting temperature of from 100°C to 180°C, for example from 120°C to 160°C or from 125°C to 150°C.

The ink carrier comprises an urethane derivative of oxidized synthetic or petroleum waxes, such as those available from Baker Petrolite and of the general formulas 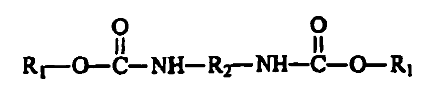 wherein R₁ is an alkyl group of the formula CH₃(CH₂)ₙ, n is an integer of from 5 to 200, for example from 10 to 150 or from 10 to 100 and R₂ is an arylene group. These materials may have a melting point of from 60°C to 120°C, such as from 70°C to 100°C or from 70°C to 90°C. Commercial examples of such materials include, for example, Baker Petrolite CA-11 (Mn = 790, Mw/Mn = 2.2), Petrolite WB-5 (Mn = 650, Mw/Mn = 1.7), Petrolite WB-17 (Mn = 730, Mw/Mn = 1.8), and the like.

Another type of ink vehicle may be n-paraffinic, branched paraffinic, and/or naphthenic hydrocarbons, typically with from 5 to 100, such as from 20 to 80 or from 30 to 60 carbon atoms, generally prepared by the refinement of naturally occurring hydrocarbons, such as BE SQUARE 185 and BE SQUARE 195, with molecular weights (Mn) of from 100 to 5,000, such as from 250 to 1,000 or from 500 to 800, for example such as available from Baker Petrolite.

Highly branched hydrocarbons, typically prepared by olefin polymerization, such as the VYBAR materials available from Baker Petrolite, including VYBAR 253 (Mn = 520), VYBAR 5013 (Mn = 420), and the like, may also be used. In addition, the ink vehicle may be an ethoxylated alcohol, such as available from Baker Petrolite and of the general formula 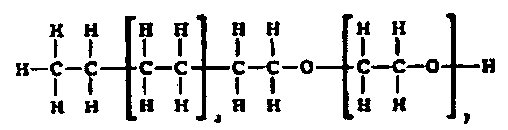 wherein x is an integer of from 1 to 50, such as from 5 to 40 or from 11 to 24 and y is an integer of from 1 to 70, such as from 1 to 50 or from 1 to 40. The materials may have a melting point of from 60°C to 150°C, such as from 70°C to 120°C or from 80°C to 110°C and a molecular weight (Mn) range of from 100 to 5,000, such as from 500 to 3,000 or from 500 to 2,500. Commercial examples include UNITHOX 420 (Mn = 560), UNITHOX 450 (Mn = 900), UNITHOX 480 (Mn = 2,250), UNITHOX 520 (Mn = 700), UNITHOX 550 (Mn = 1,100), UNITHOX 720 (Mn = 875), UNITHOX 750 (Mn = 1,400), and the like.

As an additional example, the ink vehicle may be made of fatty amides, such as monoamides, tetra-amides, mixtures thereof, and the like, for example such as described in U.S. Patent No. 6,858,070. Suitable monoamides may have a melting point of at least 50°C, for example from 50°C to 150°C, although the melting point can be outside these ranges. Specific examples of suitable monoamides include, for example, primary monoamides and secondary monoamides. Stearamide, such as KEMAMIDE S available from Witco Chemical Company and CRODAMIDE S available from Croda, behenamide/arachidamide, such as KEMAMIDE B available from Witco and CRODAMIDE BR available from Croda, oleamide, such as KEMAMIDE U available from Witco and CRODAMIDE OR available from Croda, technical grade oleamide, such as KEMAMIDE O available from Witco, CRODAMIDE O available from Croda, and UNISLIP 1753 available from Uniqema, and erucamide such as KEMAMIDE E available from Witco and CRODAMIDE ER available from Croda, are some examples of suitable primary amides. Behenyl behenamide, such as KEMAMIDE EX666 available from Witco, stearyl stearamide, such as KEMAMIDE S-180 and KEMAMIDE EX-672 available from Witco, stearyl erucamide, such as KEMAMIDE E-180 available from Witco and CRODAMIDE 212 available from Croda, erucyl erucamide, such as KEMAMIDE E-221 available from Witco, oleyl palmitamide, such as KEMAMIDE P-181 available from Witco and CRODAMIDE 203 available from Croda, and erucyl stearamide, such as KEMAMIDE S-221 available from Witco, are some examples of suitable secondary amides. Additional suitable amide materials include KEMAMIDE W40 (N,N'-ethylenebisstearamide), KEMAMIDE P181 (oleyl palmitamide), KEMAMIDE W45 (N,N'-thylenebisstearamide), and KEMAMIDE W20 (N,N'-ethylenebisoleamide).

High molecular weight linear alcohols, such as those available from Baker Petrolite and of the general formula 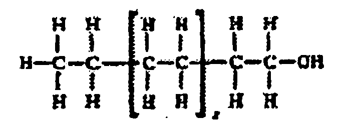 wherein x is an integer of from 1 to 50, such as from 5 to 35 or from 11 to 23, may also be used as the ink vehicle. These materials may have a melting point of from 50°C to 150°C, such as from 70°C to 120°C or from 75°C to 110°C, and a molecular weight (Mn) range of from 100 to 5,000, such as from 200 to 2,500 or from 300 to 1,500. Commercial examples include the UNILIN materials such as UNILIN 425 (Mn = 460), UNILIN 550 (Mn = 550), UNILIN 700 (Mn = 700), and distilled alcohols, the viscosity of which at the jetting temperature in one embodiment can be from 5 to 50% higher than the non-distilled alcohol.

A still further example includes hydrocarbon-based waxes, such as the homopolymers of polyethylene available from Baker Petrolite and of the general formula 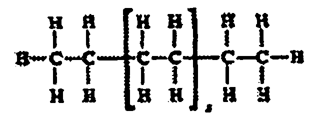 wherein x is an integer of from 1 to 200, such as from 5 to 150 or from 12 to 105. These materials may have a melting point of from 60°C to 150°C, such as from 70°C to 140°C or from 80°C to 130°C and a molecular weight (Mn) of from 100 to 5,000, such as from 200 to 4,000 or from 400 to 3,000. Example waxes include PW400 (Mn about 400), distilled PW400, in one embodiment having a viscosity of 10% to 100% higher than the viscosity of the undistilled POLYWAX® 400 at 110 °C, POLYWAX 500 (Mn about 500), distilled POLYWAX® 500, in one embodiment having a viscosity of 10% to 100% higher than the viscosity of the undistilled POLYWAX® 500 at 110°C, POLYWAX 655 (Mn about 655), distilled POLYWAX® 655, in one embodiment having a viscosity of 10% to 50% lower than the viscosity of the undistilled POLYWAX® 655 at 110 °C, and in yet another embodiment having a viscosity of 10% to 50% higher than the viscosity of the undistilled POLYWAX® 655 at 110 °C POLYWAX 850 (Mn about 850), POLYWAX 1000 (Mn about 1,000), and the like.

Another example includes modified maleic anhydride hydrocarbon adducts of polyolefins prepared by graft copolymerization, such as those available from Baker Petrolite and of the general formulas 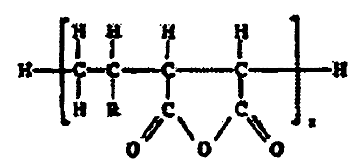 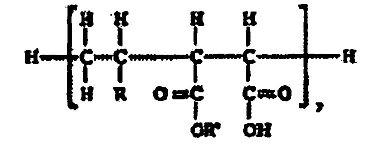 wherein R is an alkyl group with from 1 to 50, such as from 5 to 35 or from 6 to 28 carbon atoms, R' is an ethyl group, a propyl group, an isopropyl group, a butyl group, an isobutyl group, or an alkyl group with from 5 to 500, such as from 10 to 300 or from 20 to 200 carbon atoms, x is an integer of from 9 to 13, and y is an integer of from 1 to 50, such as from 5 to 25 or from 9 to 13, and having melting points of from 50°C to 150°C, such as from 60°C to 120°C or from 70°C to 100°C; and those available from Baker Petrolite and of the general formula 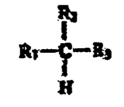 wherein R₁ and R₃ are hydrocarbon groups and R₂ is either of one of the general formulas 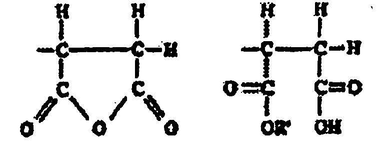 or a mixture thereof, wherein R' is an isopropyl group, which materials may have melting points of from 70°C to 150°C, such as from 80°C to 130°C or from 90°C to 125°C, with examples of modified maleic anhydride copolymers including CERAMER 67 (Mn = 655, Mw/Mn = 1.1), CERAMER 1608 (Mn = 700, Mw/Mn = 1.7), and the like.

Additional examples of suitable ink vehicles for the phase change inks include rosin esters; polyamides; dimer acid amides; fatty acid amides, including ARAMID C; epoxy resins, such as EPOTUF 37001, available from Riechold Chemical Company; fluid paraffin waxes; fluid microcrystalline waxes; Fischer-Tropsch waxes; polyvinyl alcohol resins; polyols; cellulose esters; cellulose ethers; polyvinyl pyridine resins; fatty acids; fatty acid esters; poly sulfonamides, including KETJENFLEX MH and KETJENFLEX MS80; benzoate esters, such as BENZOFLEX S552, available from Velsicol Chemical Company; phthalate plasticizers; citrate plasticizers; maleate plasticizers; sulfones, such as diphenyl sulfone, n-decyl sulfone, n-arnyl sulfone, chlorophenyl methyl sulfone; polyvinyl pyrrolidinone copolymers; polyvinyl pyrrolidone/polyvinyl acetate copolymers; novolac resins, such as DUREZ 12 686, available from Occidental Chemical Company; and natural product waxes, such as beeswax, monton wax, candelilla wax, GILSONITE (American Gilsonite Company), and the like; mixtures of linear primary alcohols with linear long chain amides or fatty acid amides, such as those with from about 6 to about 24 carbon atoms, including PARICIN 9 (propylene glycol monohydroxystearate), PARICIN 13 (glycerol monohydroxystearate), PARICIN 15 (ethylene glycol monohydroxystearate), PARICIN 220 (N(2-hydroxyethyl)-12-hydroxystearamide), PARICIN 285 (N,N'-ethylene-bis-12-hydroxystearamide), FLEXRICIN 185 (N,N'-ethylene-bis-ricinoleamide), and the like. Further, linear long chain sulfones with from about 4 to about 16 carbon atoms, such as n-propyl sulfone, n-pentyl sulfone, n-hexyl sulfone, n-heptyl sulfone, n-octyl sulfone, n-nonyl sulfone, n-decyl sulfone, n-undecyl sulfone, n-dodecyl sulfone, n-tridecyl sulfone, n-tetradecyl sulfone, n-pentadecyl sulfone, n-hexadecyl sulfone, and the like, are suitable ink vehicle materials.

The ink vehicle may comprise one or more of the aforementioned suitable materials.

The ink vehicles for the phase change inks may have melting points of from 60°C to 150°C, for example from 80°C to 120°C or from 85°C to 110°C, as determined by, for example, observation and measurement on a microscope hot stage, wherein the binder material is heated on a glass slide and observed by microscope. Higher melting points are also acceptable, although printhead life may be reduced at temperatures higher than 150°C.

In addition, the surface tension of the binder at the operating (jetting) temperature of the ink should be from 20 to 40 dynes per centimeter, for example from 40 to 65 dynes per centimeter, to enhance refill rates and color mixing. The operating, or jetting, temperatures of the phase change inks generally are from 60°C to 150°C. The viscosity of the ink at the operating temperature of the ink is generally from 1 to 20 cp, for example from 1 to 15 cp or from 5 to 15 cp.

The ink composition as a whole generally includes the ink vehicle (that is, exclusive of pigment particles, and the like) in an amount of from 25% to 99.5% by weight of the ink, for example from 30% to 90% or from 50% to 85% by weight of the ink.

The phase change inks of the disclosure also contain in embodiments at least one colorant. The colorant is present in the ink in any desired amount, typically from 0.5 to 30 percent by weight of the ink vehicle or ink vehicle/propellant mixture, for example from 1 to 50 percent by weight of the ink vehicle or ink vehicle/propellant mixture. In one embodiment, the colorant is a pigment and in another embodiment, the colorant is a mixture of at least two pigments. In another embodiment the colorant can be a dye.

In some embodiments, the colorant is a cyan pigment, such as a beta-copper pthalocyanine pigment. Suitable cyan pigments include those that have a primary average particle size range from 50 to 200 nm as determined by transmission electron microscopy according to ASTM 3849, more preferably a particle size range of 50 to 100 nm. The average primary particle size indicates the size of the primary particles of pigment present in the ink; these primary particles may form aggregates of two or more particles when present in the ink. Desirably, the selected pigment is wettable by a selected dispersant.

The phase change inks of the disclosure also contain in embodiments at least one dispersant for the purposes of dispersing and stabilizing the pigment in the ink vehicle. To enable desired dispersion of the pigment colorants in the liquid vehicle, the dispersant generally comprises first functional groups that anchor the dispersant to the pigment particles and second functional groups that are compatible with the ink vehicle. The first functional groups can suitably anchor or adsorb to the pigment particle by any suitable means such as hydrogen bonding, chemical bonding, acid-base reaction, Van der Waals interactions and the like. Thus, examples of suitable first functional groups that anchor the dispersant to the pigment particles include such functional groups as esters, amides, carboxylic acids, hydroxyl groups, anhydrides, urethanes, ureas, amines and salt groups such as quaternary ammonium salts, and the like. The first functional groups anchor the dispersant to the pigment particles such that the dispersant is, for example, adsorbed, attached or grafted to the pigment particle. Likewise, examples of the second functional groups that are compatible with the ink vehicle include such groups as alkyl groups, which can be straight or branched, saturated or unsaturated and the like. These second functional groups are compatible with, in particular, low polarity ink vehicle components.

Specific examples of suitable dispersants are polyester dispersants such as those disclosed in U.S. Patent No. 6,702,884, U.S. Patent No. 6,841,590. Dispersants can include Solsperse 16000, Solsperse 28000, Solsperse 32500, Solsperse 38500, Solsperse 39000, Solsperse 54000, Sosperse 17000, Sosperse 17940 from Noveon, Inc. as well as mixtures thereof. Examples of suitable polyester dispersants are disclosed in U.S. Patent No. 3,996,059. The dispersant is a polyester of the formula 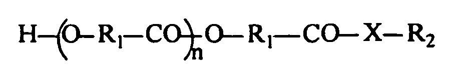 wherein each R₁ is an alkylene group, including linear, branched, saturated, unsaturated, cyclic, substituted, and unsubstituted alkylene groups containing from 8 to 40 carbon atoms, or from 8 to 30 or from 8 to 20 carbon atoms, although the numbers can be outside these ranges; X is (i) an oxygen atom, (ii) an alkylene group which is attached to the carbonyl group through an oxygen or nitrogen atom with at least 2 carbon atoms; R₂ is (i) a hydrogen atom, (ii) a primary, secondary or tertiary amine group or a salt thereof with an acid, or a quaternary ammonium salt group; and n is an integer representing a number of repeating groups, for example from 2 to 20 or from 2 to 10.

Other examples of suitable dispersants include polyalkylene succinimide dispersants such as those disclosed in U.S. Patent No. 6,858,070. Dispersants can include the Chevron Oronite OLOA 11000, OLOA 11001, OLOA 11002, OLOA 11005, OLOA 371, OLOA 375, OLOA 411, OLOA 4500, OLOA 4600, OLOA 8800, OLOA 8900, OLOA 9000, OLOA 9200 and the like, commercially available from Chevron Oronite Company LLC, Houston, Texas, as well as mixtures thereof. Other sutable dispersants from Byk-Chemie include examples such as BYK P-105, an unsaturated polycarboxylic acid, BYK 9076, an alkyl ammonium salt of high molecular weight co-polymer, BYK 9077, Disperbyk 108, a hydroxy-functional carboxylic acid ester, Disperbyk 116, an acrylate co-polymer, Disperbyk 140, a solution of an alkyl ammonium salt of an acid polymer in 2-methoxy-1-methylethyl acetate, Disperbyk 168, a solution of a high molecular weight block copolymer in a dicarboxylic acid ester, Disperbyk 2000, a solution of a modified acrylate polymer in methoxy-propyl acetate, Disperbyk 2001, a solution of a modified acrylate polymer in a mixture of methoxypropyl acetate, butylglycol and methoxypropanol.

Optionally, a propellant may be contained in the phase change ink, although it is not required in many ink compositions. Suitable propellants for the phase change inks, present in any effective amount such as from 10 to 90 percent by weight, for example from 20 to 50 percent by weight, of the ink generally have melting points of from 50° to 150°C, for example from 80° to 120°C. In another embodiment, the propellants generally have a boiling point of from 180° to 250°C, for example from 200° to 230°C. Further, the surface tension of the propellant in its liquid state at the operating temperature of the ink may be from 20 to 65 dynes per centimeter, for example from 40 to 65 dynes per centimeter, to enhance refill rates, paper wetting, and color mixing. In addition, the propellants ideally have a viscosity at the operating temperature of the ink of from 1 to 20 centipoise, for example from 1 to 5 centipoise, to enhance refill and jettability. The propellant may also be thermally stable in its molten state so that it does not undergo decomposition to yield gaseous products or to form heater deposits.

The ink can also contain an antioxidant. The antioxidants of the ink compositions protect the ink components from oxidation during the heating portion of the ink preparation and jetting processes. Specific examples of suitable antioxidants are set forth in U.S. Patent No. 6,858,070. When present, the optional antioxidant is present in the ink in any desired or effective amount, in one embodiment of at least 0.01 % by weight of the ink carrier, in another embodiment of at least 0.1 % by weight of the ink carrier, and in yet another embodiment of at least 1 % by weight of the ink carrier, and in one embodiment of equal to or less than 20% by weight of the ink carrier, in another embodiment equal to or less than 5% by weight of the ink carrier, and in yet another embodiment equal to or less than 3% by weight of the ink carrier, although the amount can be outside of these ranges. When only one antioxidant is used, a hindered amine is preferred, e.g.: Naugard 445 antioxidant (obtained from Uniroyal Chemical Co., Middlebury, CT or Crompton Corporation) In other embodiments, mixtures of antioxidants used to improve melt processing stability and long-term thermal stability include, but are not limited to, hindered amines, phosphites, hindered phenols, hydroxylamines, lactones, tocopherols, thiosynergists, and the like.

The ink disclosed herein can also contain resins and waxes such as: Crodamide 203 (commercially available from Croda), Crodamide ORX (commercially available from Croda), Kemamide S-180 and E-180 (commercially available from Witco), Unislip 1750 (commercially available from Uniqema), Uniclear 80 (commercially available from Arizona), a dicapryladipate compatibilizer such as Arizona SP-100, Vybar 263 and 243 (commercially available from Baker Petrolite), 1-docosanol (commercially available from Aldrich), Unilin 700 (commercially available from Baker Hughes), Beeswax Cerra Bellina (commercially available from Kester Keunen), branched BK-42 ester (commercially available from Kester Keunen), Kester Wax K82-D, hydroxypolyester K-82-P, synthetic Kamauba K-82-H, Siliconyl Beeswax (commercially available from Kester Keunen), stearyl alcohol 98 NF (commercially available from Kester Keunen), Kraton D1101 (commercially available from Kraton Polymers), Behenyl Behenate, straight chain even numbered mono esters having a carbon chain from C-40 to C44 (commercially available from Kester Keunen as Kester Wax 72), synthetic paraffin wax of a sharp melting point such as Callista 158 (commercially available from Shell), microcrystalline branched hydrocarbon waxes such as Microwax HG (commercially available from Paramelt), Mp= 80-86, and Microwax P827, Kemamide S-221, polyethyleneglycol 400 distearate (commercially available from Mosselman); paraffin waxes such as HNP-9 and HNP-12 (commercially available from Nippon Seiro Co.); semicrystalline wax such as HIMIC-2065 (commercially available from Nippon Seiro Co.); hydrogenated styrene-butadiene copolymers of low molecular weight such as Tuftec H 1141.11102 (commercially available from Asahi Kasei Corp); ethylene-propylene copolymers such as EP-700 and EP- 602 (commercially available from Baker Hughes); Unithox 420 ethoxylate (commercially available from Baker Hughes); propylene-ethylene copolymer alcohols of melting point in the range of 65 to 100°C (commercially available from Baker Hughes); maleic anhydride mono-isopropyl maleate such as Ceramer 1251 (commercially available from Baker Hughes); alpha olefin-maleic anhydride polymer of melting point of about 80 degree C (commercially available from Baker Petrolite) (X-5399); oxidized ethene homopolymer, Petrolite C-9500 (commercially available from Baker Hughes); oxidized 1-propene with ethane, Cardis 314, (commercially available from Baker Hughes), Victory Amber wax (commercially available from Bareco), oxidized PE such as OX-020T (commercially available from Nippon Seiro Co.). The ink can also contain paraffin waxes and microcrystalline waxes. Paraffin wax is a straight chain hydrocarbon having a melting point of about 49 to 71 degree C; microcrystalline wax is separated from asphalts and is higher in MW and more branched than the paraffin wax. The melting point of microcrystalline waxes is between 60 and 89°C. Examples of suitable paraffin waxes are HNP-3, 5,9,10,11 and HNP-12 (commercially available from Nippon Seiro Co.).

The inks of embodiments may further include conventional additives to take advantage of the known functionality associated with such conventional additives. Such additives may include, for example, defoamers, slip and leveling agents, plasticizers, pigment dispersants, etc.

Other optional additives such as dispersing agents or surfactants may be present in the inks, typically in amounts of from 0.01 to 20 percent by weight. Plasticizers that may be used include pentaerythritol tetrabenzoate, commercially available as BENZOFLEX S552 (Velsicol Chemical Corporation), trimethyl titrate, commercially available as CITROFLEX 1 (Monflex Chemical Company), N,N-dimethyl oleamide, commercially available as HALCOMID M-18-OL (C. P. Hall Company), and the like, may be added to the ink vehicle, and may constitute from 0.5 to 20 percent of the ink vehicle component of the ink. Plasticizers can either function as the ink vehicle or can act as an agent to provide compatibility between the ink propellant, which generally is polar, and the ink vehicle, which generally is non-polar.

Preparation of pigmented phase change ink compositions can include the partial or total inclusion of ink components therein during the act of pigment dispersion making. This can also include the dispersing of pigment at various pigment concentrations at various temperatures with various inputted energies. The pigment can be processed, with or without at least one dispersant, such that it is dispersed by various means including ball mills, attritors, Cobol mills, Dyno mills, paint shakers, pearl mills, agitator mills, two-roll mills, high speed stirring, three-roll mills, flow jet mills, extruders, homgenizers, kneaders and the like.

The pigment can be processed, with or without at least one dispersant, with suitable grinding media in any of the aformentioned dispersing equipment, where it is applicable, such as steel balls, glass balls, glass beads, polyethylene beads, Nylon beads, ceramic beads and the like. The phase change ink compositions may be prepared by combining some or all of the components, heating the mixture to at least its melting point, for example from 70°C to 120°C, and stirring the mixture, until a substantially homogeneous and uniform melt is obtained. When pigments are the selected colorants, the molten mixture may be subjected to grinding in an attritor or ball mill apparatus to effect dispersion of the pigment in the ink vehicle.

Printed images may be generated with the inks described herein by incorporating one or more inks into an ink jet device, for example a thermal ink jet device, an acoustic ink jet device or a piezoelectric ink jet device, and concurrently causing droplets of the inks to be ejected in an imagewise pattern onto an image receiving substrate such as paper or transparency material. Each ink of the ink sets is typically included in a reservoir connected by any suitable feeding device to the corresponding ejecting channels of the ink jet head. In the jetting procedure, the ink jet head may be heated, by any suitable method, to the jetting temperature of the inks.

The inks can also be employed in indirect printing ink jet applications, wherein when droplets of the melted ink are ejected in an imagewise pattern onto an image receiving substrate, the substrate is an intermediate transfer member and the ink in the imagewise pattern is subsequently transferred from the intermediate transfer member to a final recording substrate. The intermediate transfer member may be, for example, a drum.

In embodiments using an intermediate transfer member, the member may be heated to have a temperature on a surface thereof of from 45°C to 80°C. The elevated surface temperature permits the ink to remain in a molten state while avoiding offset or ink splitting on the surface of the transfer member, thereby enabling good transfer of the image to the end image receiving substrate such as paper or transparency.

In embodiments, the ink jet system thus includes the aforementioned inks in an ink set comprised of at least three differently colored phase change inks, such as cyan, magenta, yellow and black inks. The system also includes an ink jet device including an ink jet head consisting of one channel for each one of the differently colored phase change inks in the ink set, and a supply path that supplies each of the differently colored phase change inks to the respective channels of the ink jet head, for example from reservoirs containing each of the differently colored phase change inks.

Any suitable substrate or recording sheet can be employed, including plain papers such as XEROX® 4200 papers XEROX® 4024 papers, XEROX® Image Series papers, Courtland 4024 DP paper, ruled notebook paper, bond paper, silica coated papers such as Sharp Company silica coated paper, JuJo paper, Hammermill Laserprint Paper, and the like, transparency materials, fabrics, textile products, plastics, polymeric films, inorganic substrates such as metals and wood, and the like.

It is desirable that the pigmented ink have certain attributes that include having good filterability, remain stable over several successive freeze thaw cycles, and have good rheological stability for at least 10 days at 120°C. Furthermore, the inks do not show any significant settling after 7 days at 120°C, or after 14 days at 120°C. The disclosed inks, in embodiments, exhibit Newtonian rheology properties, in addition to improved stability. The disclosed pigmented inks can be printed over a temperature range of 100 °C to 150 °C, however, it is advantageous to print at relatively lower temperatures to further reduce printing costs by reducing energy consumption. These properties indicate that the inks include well-dispersed pigment particles with no evidence of pigment particle flocculation and settling.

### EXAMPLES

### Example 1- Preparation of Ink Base

An ink base is prepared by mixing the following components by melting and homogeneously blended them together at 110°C using an overhead stirrer: 54.75 parts by weight of a distilled Polyethylene Wax from Baker Petrolite, 15.58 parts by weight triamide wax (triamide described in U.S. Patent No. 6,860,930), 15.79 parts by weight S-180 (a stearyl stearamide) commercially available from Crompton Corp, 12.64 parts by weight KE-100 resin commercially available from Arakawa Corporation, triglycerides of hydrogenated abietic (rosin) acid, from Arakawa Chemical Industries, Ltd., 1.06 parts by weight of a urethane resin that is the adduct of three equivalents of stearyl isocyanate and a glycerol-based alcohol, prepared as described in Example 4 of U.S. Patent 6,309,453, and 0.21 parts by weight Naugard-445 (an antioxidant) available from Crompton Corp.

### Example 2 - Preparation of Cyan Pigmented Ink Concentrate

A base solution for the preparation of the ink concentrate is prepared by adding 17.58 g Solsperse 17000 from Noveon Inc.to 162 g of the ink base prepared in Example 1 and stirred for about 3 minutes at 120 °C. A Szegvari 01 attritor pre-heated to 110 °C is charged with 1800 g 1/8" 440 C Grade 25 stainless steel balls that are preheated to 120 °C. The attritor is allowed to equilibrate for 30 minutes upon which 26.37 g of Hostaperm B4 G pigment from Clariant is added slowly to the ink base. A multi-staged impeller is then attached to the attritor and the speed adjusted to give an impeller tip velocity of about 7 cm/s. The pigmented mixture is allowed to attrite overnight for 19 hours upon which the resultant ink concentrate shows excellent free-flowing behavior which is discharged and separated from the steel balls in its molten state.

### Example 3 - Preparation of Cyan Pigmented Ink

A solution is made by blending 81.3 g of the ink base of Example 1 with 0.28 g of Solsperse 17000 in the oven at 120°C. This solution is added dropwise to 25.0 g of the pigment concentrate from example 2 in the oven at 120°C while stirring at 300 RPM. The resulting pigmented ink is coarsely filtered at 120°C past a 2 µm glass fiber filter available commercially from Pall Corporation. Thereupon the dispersion is divided into two parts; half is filtered past 1 µm glass fiber filter, and the other half is aged at 120°C for 7 days and then filtered through a fresh 1 µm glass fiber filter also available commercially from Pall Corporation. The attributes of each filtration are similar to each other inferring that no significant flocculation or settling occurs in the ink from Example 3 over at least 7 days while at 120 °C. Both the fresh and aged 1 µm filtered samples were freeze-thawed three times and filtered through 1 µm after each freeze-thaw. The shear rate viscosity was measured on the 1 µm filtrates of the third freeze-thawed samples using an RFS3 rheometer from Rheometrics Scientific. The Table below shows the final ink formulation.

| **Ink Vehicle Component** | **Wt-Percent Amount** |
|---|---|
| Distilled Polyethylene Wax | 51.85 |
| S-180 (Stearyl Stearamide) | 14.96 |
| Triamide Component A | 14.76 |
| KE-100 | 11.97 |
| Urethane resin Component B | 1.00 |
| Naugard-445 | 0.20 |
| Hostaperm B4-G | 3.01 |
| Solsperse 17000 | 2.27 |

The average viscosity of the ink at 120°C (1 µm filtered) was 10.8 cPs, and the average viscosity of the ink at 110°C (1 µm filtered) was 14.2 cPs.

### Example 4 - Stability and Printing Testing

To further test the stability of the inks, settling studies were performed. To determine the amount of pigment settling in the ink, 2 x 5 g samples of two fresh and two inks that had been thermally aged for 7 days at 120 °C were put in narrow settling tubes and kept in the oven at 120°C, one set for 4 days and the other for 7 days. No visual settling was observed for any of the ink samples after they had been aged in the oven at 120°C for 4 and 7 days. After the 4 and 7 day aging periods the ink samples were removed from the oven and allowed to solidify. Two prints of each of the ink samples were generated using a K-Printing Proofer manufactured by RK Print Coat Instruments where one print was made from sampling at the top of a given solidified ink sample and the other corresponding print was made from sampling at the bottom of the same respective solidified ink sample. The optical densities of all 16 K-proofs were measured by a SpectroScan spectrodensitometer manufactured by GretagMacbeth™ to determine the variations in optical density between the top and bottom portions of each of the ink samples. It was observed that the K-proof print optical densities of the respective top and bottom samplings from each of the eight ink samples differed from a range of only 0.01 a.u to 0.05 a.u at 95% confidence level from 3 optical density measurements performed for each K-proof print. This indicated that little or no pigment settling had occurred for any of the ink samples during the 4 and 7 day aging period at 120 °C.

The ink formulations were successfully jetted at 120°C in the Xerox PHASER® 8200 and 8400 printers.

All of these studies indicate a printable, stable ink that is resistant to aggregation and settling of pigment particles at elevated temperature such as 120 °C.

## Claims

1. A phase change ink composition comprising:
an ink carrier,
a dispersing agent, and
pigment particles,
wherein the dispersing agent is of the formula: 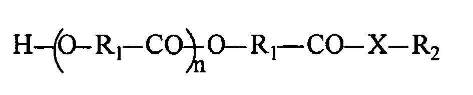
wherein each R₁ is an alkylene group containing from 8 to 40 carbon atoms; X is (i) an oxygen atom, (ii) an alkylene group which is attached to the carbonyl group through an oxygen or nitrogen atom with at least 2 carbon atoms; R₂ is (i) a hydrogen atom, (ii) a primary, secondary or tertiary amine group or a salt thereof with an acid, or a quaternary ammonium salt group; and n is an integer between 2 and 20, and
wherein the ink carrier comprises a urethane derivative of the following formula 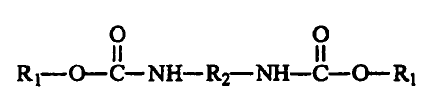
wherein R₁ is an alkyl group of the formula CH₃(CH₂)ₙ, n is an integer of from 5 to 200, and R₂ is an arylene group.

2. An ink composition according to claim 1, wherein the ink carrier comprises at least one amide selected from the group consisting of monoamides, diamides, triamides, tetra-amides, and mixtures thereof.

3. A method for making an ink jet ink composition, comprising:
mixing an ink carrier, a dispersing agent, and pigment particles to form a homogeneous composition, wherein the dispersing agent is of the formula: 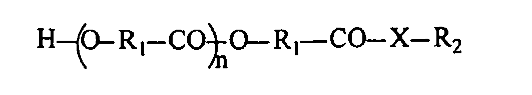
wherein each R₁ is an alkylene group containing from 8 to 40 carbon atoms; X is (i) an oxygen atom, (ii) an alkylene group which is attached to the carbonyl group through an oxygen or nitrogen atom with at least 2 carbon atoms; R₂ is (i) a hydrogen atom, (ii) a primary, secondary or tertiary amine group or a salt thereof with an acid, or a quaternary ammonium salt group; and n is an integer between 2 and 20, and
wherein the ink carrier comprises a urethane derivative of the following formula 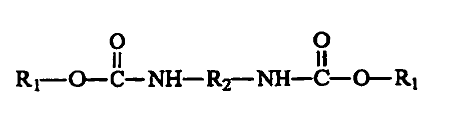
wherein R₁ is an alkyl group of the formula CH₃(CH₂)ₙ, n is an integer of from 5 to 200, and R₂ is an arylene group.

4. A method of forming an image, comprising:
providing an ink composition comprising an ink carrier, a dispersing agent,
and pigment particles, wherein the ink composition is the phase change ink composition of claim 1, and
applying the ink composition to a substrate to form an image.

5. A printer cartridge comprising an ink jet ink composition according to claim 1.

6. A printer comprising a printer cartridge according to claim 5.

## Patentansprüche

1. Phasenwechseltintenzusammensetzung umfassend:
einen Tintenträger,
ein Dispergiermittel, und
Pigmentteilchen,
wobei das Dispergiermittel die Formel aufweist: 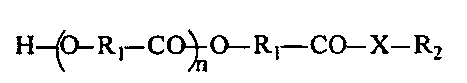
wobei jedes R₁ eine Alkylengruppe ist, die 8 bis 40 Kohlenstoffatome enthält; X (i) ein Sauerstoffatom, (ii) eine Alkylengruppe, welche durch ein Sauerstoff- oder Stickstoffatom an die Carbonylgruppe gebunden ist, mit wenigstens 2 Kohlenstoffatomen ist; R₂ (i) ein Wasserstoffatom, (ii) eine primäre, sekundäre oder tertiäre Amingruppe oder ein Salz davon mit einer Säure, oder eine quartäre Ammoniumsalzgruppe ist; und n eine ganze Zahl zwischen 2 und 20 ist, und
wobei der Tintenträger ein Urethanderivat der folgenden Formel umfasst 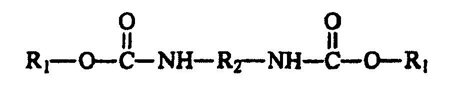
wobei R₁ eine Alkylgruppe der Formel CH₃(CH₂)ₙ ist, n eine ganze Zahl von 5 bis 200 ist und R₂ eine Arylengruppe ist.

2. Tintenzusammensetzung nach Anspruch 1, wobei der Tintenträger wenigstens ein Amid, ausgewählt aus der Gruppe bestehend aus Monoamiden, Diamiden, Triamiden, Tetraamiden und Mischungen davon, umfasst.

3. Verfahren zum Herstellen einer Tintenstrahltintenzusammensetzung, umfassend:
das Vermischen eines Tintenträgers, eines Dispergiermittels und von Pigmentteilchen, um eine homogene Zusammensetzung zu bilden, wobei das Dispergiermittel die Formel aufweist: 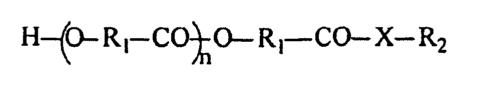
wobei jedes R₁ eine Alkylengruppe ist, die 8 bis 40 Kohlenstoffatome enthält; X (i) ein Sauerstoffatom, (ii) eine Alkylengruppe, welche durch ein Sauerstoff- oder Stickstoffatom an die Carbonylgruppe gebunden ist, mit wenigstens 2 Kohlenstoffatomen ist; R₂ (i) ein Wasserstoffatom, (ii) eine primäre, sekundäre oder tertiäre Amingruppe oder ein Salz davon mit einer Säure, oder eine quartäre Ammoniumsalzgruppe ist; und n eine ganze Zahl zwischen 2 und 20 ist, und
wobei der Tintenträger ein Urethanderivat der folgenden Formel umfasst 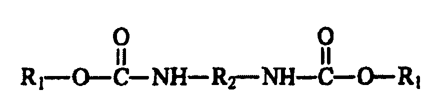
wobei R₁ eine Alkylgruppe der Formel CH₃(CH₂)ₙ ist, n eine ganze Zahl von 5 bis 200 ist und R₂ eine Arylengruppe ist.

4. Verfahren zum Erzeugen eines Bildes, umfassend:
das Bereitstellen einer Tintenzusammensetzung umfassend einen Tintenträger, ein Dispergiermittel und Pigmentteilchen, wobei die Tintenzusammensetzung die Phasenwechseltintenzusammensetzung nach Anspruch 1 ist, und
das Aufbringen der Tintenzusammensetzung auf ein Substrat, um ein Bild zu erzeugen.

5. Druckerpatrone umfassend eine Tintenstrahltintenzusammensetzung nach Anspruch 1.

6. Drucker umfassend eine Druckerpatrone nach Anspruch 5.

## Revendications

1. Composition d'encre à changement de phase comprenant :
un support d'encre,
un agent de dispersion, et
des particules de pigment,
dans laquelle l'agent de dispersion est de la formule : 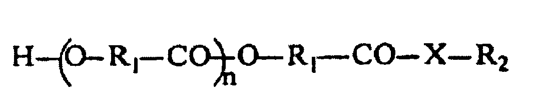
dans laquelle chaque R₁ est un groupe alkylène contenant de 8 à 40 atomes de carbone ; X est (i) un atome d'oxygène, (ii) un groupe alkylène qui est lié au groupe carbonyle par l'intermédiaire d'un atome d'oxygène ou d'azote avec au moins 2 atomes de carbone ; R₂ est (i) un atome d'hydrogène, (ii) un groupe amine primaire, secondaire ou tertiaire ou un sel de celui-ci avec un acide, ou un groupe sel ammonium quaternaire ; et n est un entier entre 2 et 20, et
dans laquelle le support d'encre comprend un dérivé d'uréthane de la formule suivante 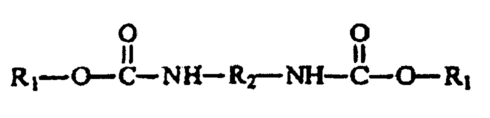
dans laquelle R₁ est un groupe alkyle de la formule CH₃(CH₂)ₙ, n est un entier de 5 à 200, et R₂ est un groupe arylène.

2. Composition d'encre selon la revendication 1, dans laquelle le support d'encre comprend au moins un amide choisi parmi le groupe consistant en des monoamides, des diamides, des triamides, des tétra-amides, et des mélanges de ceux-ci.

3. Procédé de fabrication d'une composition d'encre pour jet d'encre, comprenant :
le mélange d'un support d'encre, d'un agent de dispersion, et de particules de pigment pour former une composition homogène, dans lequel l'agent de dispersion est de la formule : 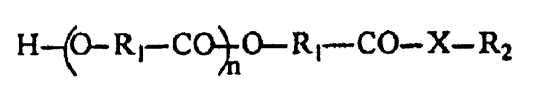
dans laquelle chaque R₁ est un groupe alkylène contenant de 8 à 40 atomes de carbone ; X est (i) un atome d'oxygène, (ii) un groupe alkylène qui est lié au groupe carbonyle par l'intermédiaire d'un atome d'oxygène ou d'azote avec au moins 2 atomes de carbone ; R₂ est (i) un atome d'hydrogène, (ii) un groupe amine primaire, secondaire ou tertiaire ou un sel de celui-ci avec un acide, ou un groupe sel ammonium quaternaire ; et n est un entier entre 2 et 20, et
dans lequel le support d'encre comprend un dérivé d'uréthane de la formule suivante 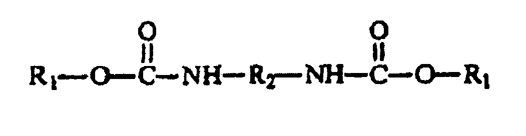
dans laquelle R₁ est un groupe alkyle de la formule CH₃(CH₂)ₙ, n est un entier de 5 à 200, et R₂ est un groupe arylène.

4. Procédé de formation d'une image, comprenant :
la prévision d'une composition d'encre comprenant un support d'encre, un agent de dispersion, et des particules de pigment, dans lequel la composition d'encre est la composition d'encre à changement de phase selon la revendication 1, et
l'application de la composition d'encre à un substrat pour former une image.

5. Cartouche d'imprimante comprenant une composition d'encre pour jet d'encre selon la revendication 1.

6. Imprimante comprenant une cartouche d'imprimante selon la revendication 5.
